# EUROPEAN PATENT APPLICATION

(11) **EP 2 632 186 A1**
(43) Date of publication of application: **28.08.2013**
(21) Application number: 13156280.3
(22) Date of filing: 22.02.2013
(51) Int. Cl.: H04W 4/18, G11B 27/10

(54) **Mobile communication terminal and method of generating content thereof**

(30) Priority: 22.02.2012 KR 20120018068
(71) Applicant: Samsung Electronics Co., Ltd, Gyeonggi-do 443-742 (KR)
(72) Inventor: Lee, Dong-Chang, 443-742 Gyeonggi-do (KR); Lee, Dong-Hyuk, 443-742 Gyeonggi-do (KR); Kim, Do-Hyeon, 443-742 Gyeonggi-do (KR); Ahn, Hee-Bum, 443-742 Gyeonggi-do (KR); Chang, Won-Suk, 443-742 Gyeonggi-do (KR)
(74) Representative: Grünecker, Kinkeldey, Stockmair & Schwanhäusser

(57) **Abstract**

A mobile communication terminal and method thereof capable of generating content data according to a synchronization scheme suitable for a mobile environment are provided, which allow a user to simply create and share content. The method includes receiving a user input or selection instruction for a plurality of content; determining whether there is sound data among the plurality of content; and if there is sound data, generating content data by synchronizing first content to be displayed while the sound data is played among the plurality of content to first segment data.

## Description

### BACKGROUND OF THE INVENTION

### 1. Field of the Invention

The present invention relates generally to a method and apparatus for generating content data, and more particularly, to a mobile communication terminal capable of generating content data according to a synchronization scheme suitable for a mobile environment which allows a user to simply create and share content, and a method of generating content thereof.

### 2. Description of the Related Art

A conventional technological standard is a Synchronized Multimedia Integration Language (SMIL). SMIL is a World Wide Web Consortium (W3C) standard presentation language for timely and spatially laying out and controlling multimedia data using Extensible Markup Language (XML). Among the main features of SMIL are describing temporal behaviors of presentations, describing the layout of presentations on a screen, and combining a hyperlink with a media object. Application fields of SMIL include news captions, lyrics processing of video music, multimedia advertisements, education content, etc.

SMIL employs a scheme to make a different combination and synchronize already-made multimedia data depending on its application field. For an example of the lyrics processing of video music, SMIL enables synchronization of the video music multimedia data and text data to be output when and where the user wants. The synchronization scheme of SMIL defines time and position based on XML, a language in a text format. However, this scheme does not fit in the mobile environment because it is performed on a time basis and so it is not easy for the user to create and share content.

Therefore, a synchronization scheme suitable for a mobile environment in which to allow a user to simply create and share content with a terminal is needed.

### SUMMARY OF THE INVENTION

The present invention has been made to overcome the above problems and/or disadvantages and to provide the advantages below. Accordingly, aspects of the present invention provide a mobile communication terminal capable of generating content data according to a synchronization scheme suitable for a mobile environment which allows a user to simply create and share content, and a method of generating content thereof.

In accordance with an aspect of an embodiment of the present invention, a mobile communication terminal is provided which includes a user input unit for receiving a user input or selection instruction for a plurality of content; a content generator for generating the plurality of content to be single content data; and a controller for determining whether there is sound data among the plurality of content and controlling the content generator to synchronize first content to be displayed while the sound data is played among the plurality of content to first segment data with sound data if there is the sound data, and to synchronize second content to be displayed while the sound data is not played among the plurality of content to at least one piece of second segment data.

In accordance with an aspect of an embodiment of the present invention, there is provided a method of generating content in a mobile communication terminal, the method including receiving a user input or selection instruction for a plurality of content; determining whether there is sound data among the plurality of content; and if there is the sound data, generating content data by synchronizing first content to be displayed while the sound data is played among the plurality of content to first segment data.

### BRIEF DESCRIPTION OF THE DRAWINGS

The above and other features and advantages of the present invention will become more apparent from the following detailed description of embodiments of the present invention with reference to the attached drawings, in which:
FIG. 1 is a block diagram of a mobile communication terminal, according to an embodiment of the present invention;
FIG. 2 is a flowchart of a method of generating content data in the mobile communication terminal, shown in FIG. 1;
FIG. 3 is a flowchart of a method of receiving content from a user to create content data in the mobile communication terminal, shown in FIG. 1;
FIG. 4 is a flow diagram representing the method of receiving content, shown in FIG. 3;
FIG. 5 is a flow diagram of playing content data when the content data is generated by the mobile communication terminal based on the received content, according to an embodiment of the present invention;
FIG. 6 is a flow diagram of playing content data when the content data is generated by the mobile communication terminal based on the received content, according to another embodiment of the present invention; and
FIGS. 7A and 7B show examples of inputting content data to the mobile communication terminal shown in FIG. 1.

### DETAILED DESCRIPTION OF EMBODIMENTS OF THE PRESENT INVENTION

Reference will now be made in detail to embodiments, examples of which are illustrated in the accompanying drawings, wherein like reference numerals refer to the like elements throughout. In this regard, the embodiments of the present invention may have different forms and should not be construed as being limited to the descriptions set forth herein. Accordingly, the embodiments are merely described below, by referring to the figures, to explain aspects of the present description.

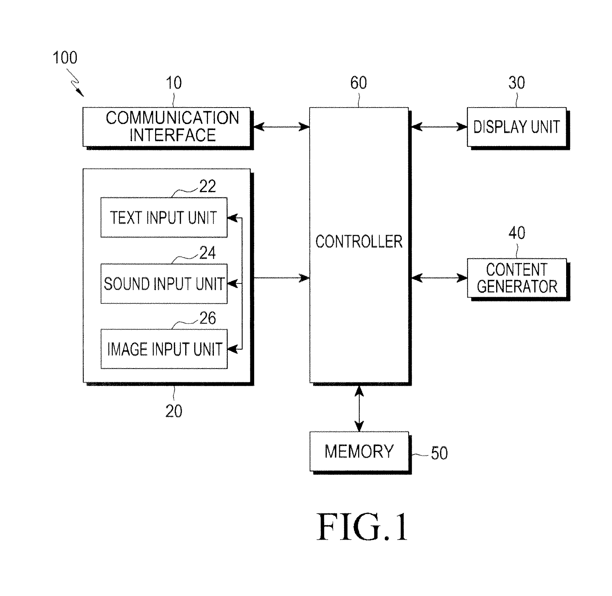

FIG. 1 is a block diagram of a mobile communication terminal, according to an embodiment of the present invention.

Referring to FIG. 1, the mobile communication terminal 100 includes a user input unit 20, a display unit 30, a content generator 40, and a controller 60, and further includes a communication interface 10 and a memory 50.

The communication interface 10 conducts wired or wireless communication of the mobile communication terminal 100. In the embodiment of the present invention, the communication interface 10 transmits text data, sound data, image data, and content data, including all of the foregoing data, to another terminal (not shown). The communication interface 10 also receives text data, sound data, image data, and content data, including all of the data, from another terminal.

Text data may be any of texts input by a user, stored in the memory 50 in advance, texts received from another terminal, and the like. Sound data may be any of sounds input through a microphone (not shown) equipped in the mobile communication terminal 100, stored in the memory 50 in advance, sounds received from another terminal, and the like. The text data, sound data and image data input through the user input 20 may be contents included in the content data.

The user input unit 20 receives a user input or selection instruction for a plurality of content. In the embodiment of the present invention, the user input unit 20 receives the text data, sound data, or image data from the user.

The user input unit 20 includes a text input unit 22 for receiving texts, a sound input unit 24 for receiving sound data, an image input unit 26 for receiving image data.

The user input unit 20 receives content for creating the content data by receiving from the user a user input to select at least one of the text data, sound data, and image data. The user inputs content to the mobile communication terminal 100 by simply selecting the content in the foregoing way, so the mobile communication terminal 100 may allow the user to easily create content data that he/she wants.

The user input unit 20 receives a user input to display the content data. In an embodiment of the present invention, the user input unit 20 receives a user input to fast-forward, rewind, pause, or stop playing content data. Also, in the course of creating the content data, the user input unit 20 may receive a user input to redo or undo the content data.

Furthermore, the user input unit 20 receives a user input to determine a sequence of playing the plurality of content included in pieces of segment data constituting the content data. For example, assume that a first content is received first with a first sound and then a second content is received next, with those contents being used to generate first segment data. When the first segment data is played, the user input unit 20 receives a user input to synchronize the segment data that includes first and second contents so that the first segment data is played in a sequence of "second content → first content".

The display unit 30 displays diverse data of the mobile communication terminal 100. In an embodiment, the display unit 30 displays content data on the display screen. The display unit 30 may be implemented in a form of touchscreen, so that it may play a role of the user input unit 20 that receives texts or images from the user. In an embodiment, the display unit 30 displays content data in a unit of data segments. For example, if it is assumed that the content data consists of first, second, and third segment data, the display unit 30 only displays the second and third segment data in response to a user input through the user input unit 20.

In an embodiment, the display unit 30 displays content data in units of content included in the segment data. For example, the display unit 30 may only display second and third content among first to third content included in the first segment data.

The content generator 40 generates the content data.

In the present invention, the term "content data" refers to data having at least one of text data, sound data, image data, etc. For example, if it is assumed that user's voice has been recorded for 30 seconds against a background image stored in the memory 50, the content data then refers to a combination of the background image and the sound recorded for 30 seconds i.e., sound data.

In the embodiment, the content generator 40 generates content data for each segment in which the user's voice is recorded. For example, if it is assumed that the user recorded a "voice C" while inputting a "text B" against the background of an "image A", upon completion of recording of the "voice C", it is also assumed that the user has inputted a "text E" against the background of an "image D" again. In the embodiment, the content data may include all data from when the user recorded the voice C while inputting the text B against the background of the image A to when the input of the text E is completed.

The content generator 40 determines and stores a segment in which the voice C is recorded, i.e., an entire segment in which the user inputs text B against the background of the image A as "first segment data". It also determines and stores an entire segment in which the text E is inputted against the background of the image D as "second segment data". The content generator 40 generates content data including the first and second segment data.

Each segment data corresponds to a playing unit for displaying or playing the content data through, for example, the display unit 30 of the mobile communication terminal 100. When the content data is displayed, the display unit 30 does not display the second segment data until displaying of all the data included in the first segment data is completed.

For example, assume that play time of the sound C of the first segment data is 1 minute, and time taken to input the image A and the text B is 30 seconds. That is, even if displaying of the image A or text B is completed in 30 seconds, the display unit 40 does not display the image D and text E included in the second segment data while the sound C is playing.

In addition, in an embodiment, the content generator 40 generates content data according to a user input to determine a play sequence or synchronization sequence of content input through the user input unit 20. The user input unit 20 receives the user input to determine the play sequence or synchronization sequence of a plurality of content to be synchronized as one segment data when the content data is generated, under control of the controller 60. For example, assume that the user input unit 20 received content from the user in the sequence of "first content → second content → third content" as data used to generate the content data. The content generator 40 generates segment data to be played in the same sequence of first, second, and third contents as the input sequence. The content generator 40 also generates segment data to be played in a sequence of "first content → third content → second content", or in a sequence of "second content → third content → first content", depending on the user input.

In the embodiment, the content generator 40 converts, i.e., encodes the content data in Joint Photographic Experts Group (JPEG) format and stores it in the memory 50. In an embodiment, the content generator 40 encodes each segment data in the JPEG format and stores it in the memory 50. The content generator 40 also generates the segment data by converting the sound data in the 3 GP (3GPP (3rd Generation Partnership Project)) Format File) format and embedding it in segment data where the sound data is to be included.

In addition, if the content data encoded in the JPEG format is transmitted to another terminal through the communication interface 10, the content generator 40 decodes the content data in a format to be displayed by the mobile communication terminal 100.

The memory 50 stores different kinds of data for operating the mobile communication terminal 100. In the embodiment, the memory 50 stores data transmitted/received through the communication interface 10, text data, sound data, image data, etc., input through the user input unit 20. The memory 50 also stores content data generated by the content generator 40.

The controller 60 controls general operations of the mobile communication terminal 100. In the embodiment, the controller 60 controls the content generator 40 to tell each segment of the content data when the content generator 40 generates the content data.

The controller 60 determines whether there is sound data among a plurality of content input through the user input unit 20. If there is sound data, the controller 60 controls the content generator 40 to synchronize content based on the sound data.

When there is sound data among the plurality of content, the controller 60 controls the content generator 40 to synchronize first content to be displayed with the sound data while the sound data among the plurality of content is played. On the other hand, if there is no sound data among the plurality of content, the controller 60 controls the content generator 40 to synchronize second content to be displayed to at least one second segment data while the sound data among the plurality of contents is not played. In the embodiment, the controller 60 controls the content generator 40 to generate each of the first and second segment data by synchronizing them in input order of content.

The second segment data includes second content input or selected through the user input unit 20 from when the plurality of content are input or selected to when the sound data is input. Alternately, the second segment data may include second content input or selected through the user input unit 20 from when the input of the sound data is completed to when another sound data is input through the user input unit 20.

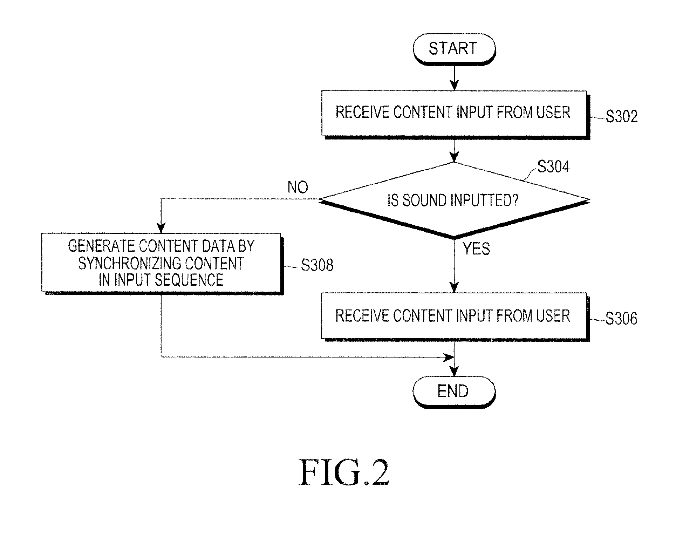

FIG. 2 is a flowchart of a method of generating content data in the mobile communication terminal, shown in FIG. 1.

Referring to FIG. 2, the user input unit 20 of the mobile communication terminal 100 receives content input from the user, in step S302. Upon the reception of the content, the controller 60 determines whether there is a sound received among the input content, in step S304. The "sound" may be at least one of sound data input through a microphone (not shown) and sound data stored in the memory 50 in advance.

If it is determined that there is sound input in step S304, the content generator 40 of the mobile communication terminal 100 receives content input from user in step S306. The mobile terminal can continuously receive the content input until the content input from the user is completed.

On the contrary, if it is determined that there is no sound input in step S304, the content generator 40 of the mobile communication terminal 100 generates content data by synchronizing the contents in input order of the contents, in step S308.

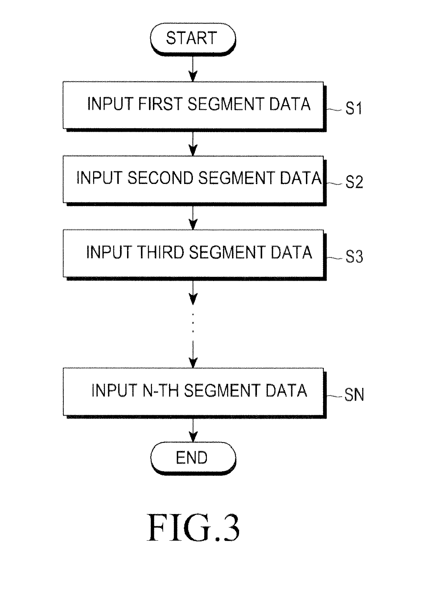

FIG. 3 is a flowchart of a method of receiving contents from a user to create content data in the mobile communication terminal, shown in FIG. 1.

Referring to FIG. 3, the mobile communication terminal 100 receives first segment data input from the user in step S1, receives second segment data input from the user in step S2, and receives third segment data input from the user in step S3. In this manner, the user input unit 20 receives N-th segment data input from the user, in step SN. In other words, according to a sequence of data input from the user, each segment is determined for respective first segment data to N-th segment data, and the content generator 40 generates content data for the determined segments.

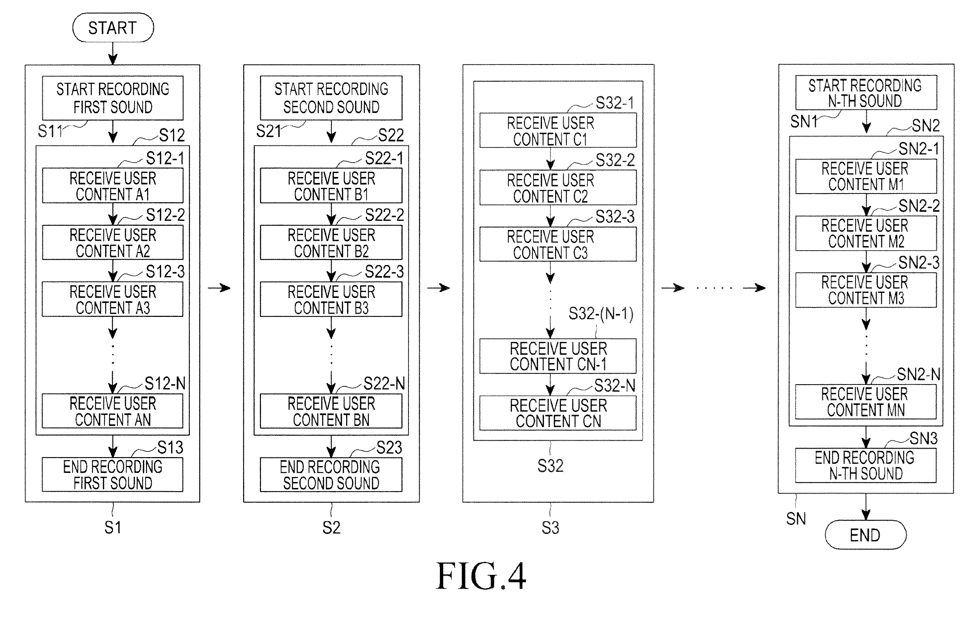

FIG. 4 is a flow diagram representing the method of receiving content, shown in FIG. 3.

Referring to FIG. 4, step S1 of receiving the first segment data consists of starting recording of a first sound in step S11, receiving user content A in step S12, and ending the recording of the first sound in step S13. Step S12 of receiving the user content A consists of step S12-1 of receiving user content A1 from the user, step S12-2 of receiving user content A2,...., and step S12-N of receiving user content AN.

The first segment data includes the user content A input together with the first sound while the first sound is recorded. That is, the first segment data includes the user content A consisting of user content A1, A2, A3, .., AN.

Step S2 of receiving the second segment data consists of starting recording of a second sound in step S21, receiving user content B in step S22, and ending the recording of the second sound in step S23. Step S22 of receiving the user content B consists of step S22-1 of receiving user content B1 from the user, step S22-2 of receiving user content B2,...., and step S22-N of receiving user content BN.

The second segment data includes the user content B input together with the second sound while the second sound is recorded. That is, the second segment data includes the user content B consisting of user contents B1, B2, B3,..., BN.

It is assumed that no separate sound is recorded while the third segment data is input. Thus, step S3 of receiving the third segment data only includes receiving user content C from the user in step S32. Step S32 of receiving the user content C consists of step S32-1 of receiving user content C1, step 532-2 of receiving user content C2, step S32-3 of receiving user content C3, ..., step S32-(N-1) of receiving user content CN-1, and step S32-N of receiving user content CN.

The third segment data only consists of the user content C input from the user without a separate sound data, i.e., user contents C1, C2, C3,..., CN-1, and CN. In the embodiment of the present invention, when no sound, such as voice, is included as in the user content C, only pieces of data while no sound is input are determined and stored as separate single segment data.

Step SN of receiving the N-th segment data consists of starting recording of N-th sound in step SN1, receiving user content M in step SN2, and ending the recording of the N-th sound in step SN3. Step SN2 of receiving the user content M consists of step SN2-1 of receiving user content M1 from the user, step SN2-2 of receiving user content M2,..., and step SN2-N of receiving user content MN.

The N-th segment data includes the user content M input together with the N-th sound while the N-th sound is recorded. That is, the N-th segment data includes the user content M consisting of user contents M1, M2, M3,..., MN.

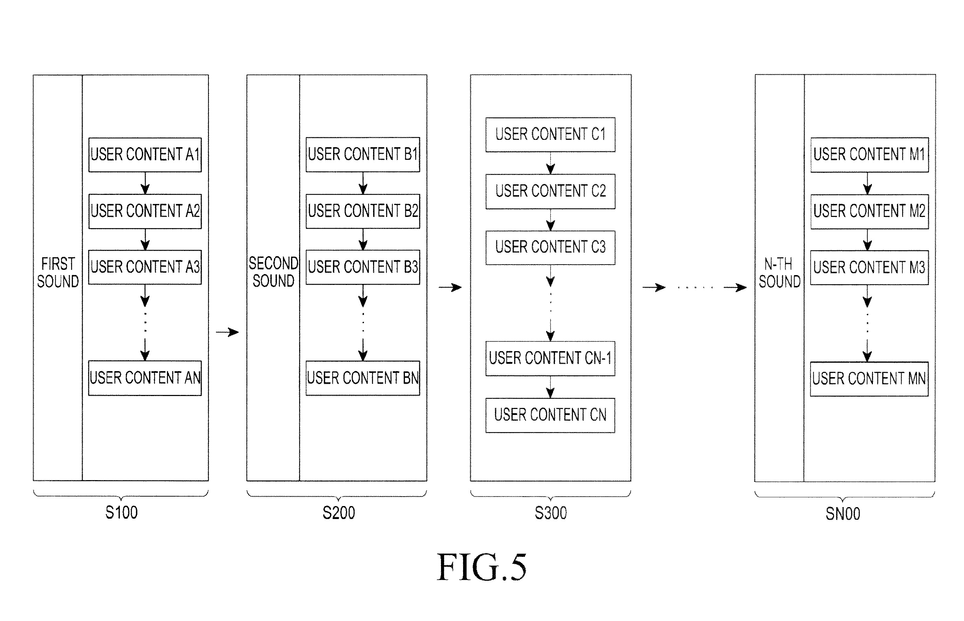

FIG. 5 is a flow diagram of playing content data when the content data is generated by the mobile communication terminal 100 based on the received content, according to an embodiment of the present invention.

Referring to FIG. 5, the content data is sequentially played in order of first, second, third,..., N-th segment data, in steps S100 to SN00. In step S100 of playing the first segment data, user contents A1, A2, A3,..., and AN are sequentially played while the first sound is played. In step S200 of playing the second segment data, user contents B1, B2, B3,..., and BN are sequentially played while the second sound is played. In step S300 of playing the third segment data, user contents C1, C2, C3,..., Con-1, and CN are sequentially played. In this manner, in step N00 of playing the N-th segment data, while the N-th sound is played, user contents M1, M2, M3,..., and MN are played.

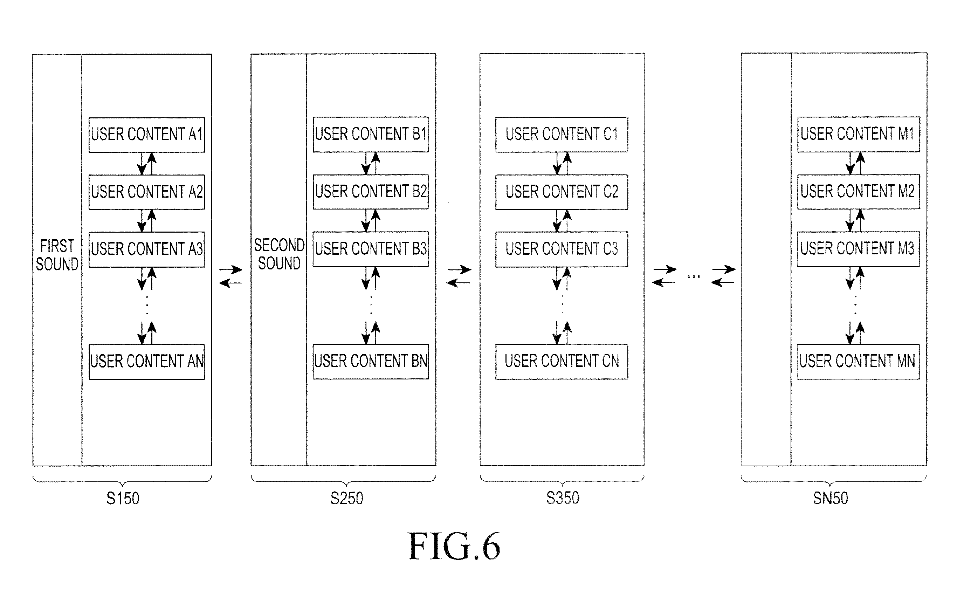

FIG. 6 is a flow diagram of playing content data when the content data is generated by the mobile communication terminal based on the received content, according to another embodiment of the present invention.

In this embodiment, the mobile communication terminal 100 may be provided with Redo and Undo functions. The Redo function may be used to re-play a particular segment data, and the Undo function is used to cancel the play of the particular segment data or to re-play from previous segment data to the particular segment data.

Referring to FIG. 6, the content data is sequentially played in order of first, second, third,..., N-th segment data, in steps S150 to SN50. In step S150 of playing the first segment data, user contents A1, A2, A3,..., and AN may be sequentially played while the first sound is played. In step S250 of playing the second segment data, user contents B1, B2, B3,..., and BN may be sequentially played while the second sound is played. In step S350 of playing the third segment data, user contents C1, C2, C3,..., and CN are sequentially played. In this manner, in step SN50 of playing the N-th segment data, while the N-th sound is played, user contents M1, M2, M3,..., and MN may be played.

As such, if a user input to perform the Redo function or the Undo function is input through the user input unit 20 while user content is played, the controller 60 determines a point of time when the user input is input and re-plays a particular segment data with respect to the point of time, or undoes the play of the particular segment data.

For example, if a user input to perform the Undo function is input while the user content B1 is played, the controller 60 controls the mobile communication terminal 100 to stop playing the content B and play the first sound and the user content A. That is, the mobile communication terminal 100 performs step S150 from the beginning.

In another embodiment, if a user input to perform the Undo function is input, the controller 60 controls the mobile communication terminal 100 to play user content AN and a part of the sound that was received together with the user content AN while having received the user content AN from the user. In other words, the mobile communication terminal 100 may only perform the last step of receiving the user content AN in step S150 and play the sound that was received together with the user content AN while having received the user content AN

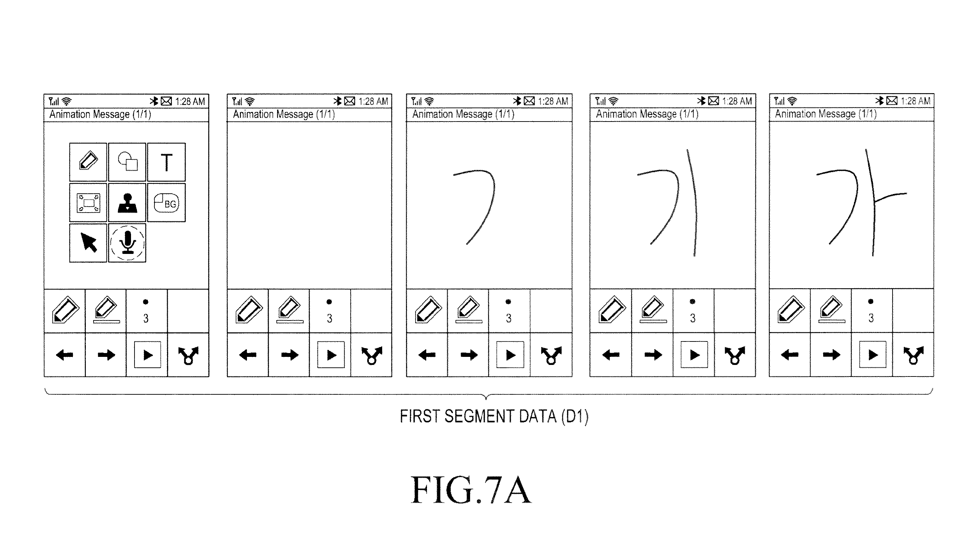

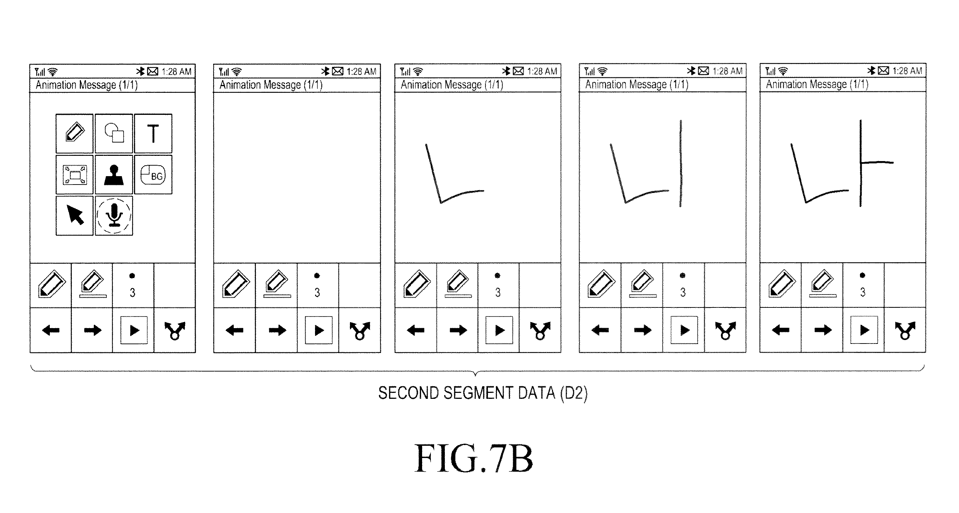

FIGS. 7A and 7B show examples of inputting content data to the mobile communication terminal shown in FIG. 1.

FIG. 7A represents the first segment data D1, and FIG. 7B represents the second segment data D2. The mobile communication terminal 100 may receive the second segment data D2 after receiving the first segment data D1 from the user.

The first segment data D1 of FIG. 7A is generated by the user selecting text input and inputting a letter ' 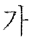 ' while first selecting sound recording and recording the first sound, and a process of inputting the text ' 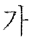 ' in addition to the recorded sound and the text ' 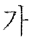 ' may be stored as the first segment data D1.

The first segment data D2 of FIG. 7B is generated by the user selecting text input and inputting a letter ' 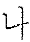 ' while first selecting sound recording and recording the second sound, and a process of inputting the text ' 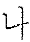 ' in addition to the recorded sound and the text ' 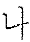 ' may be stored as the second segment data D2.

The content data in FIGS. 7A and 7B combines the first segment data D1 and the second segment data D2. Once playing of the content data is selected by the user, the controller 60 displays the first and second data D1 and D2 through the display unit 30 and a speaker (not shown). The display unit 30 displays the first segment data D1 by playing and displaying the process of inputting ' 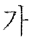 ' while playing the first sound. Similarly, the display unit 30 displays the second segment data D2 by playing and displaying the process of inputting ' 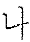 ' while playing the second sound.

While the present invention has been particularly shown and described with reference to certain embodiments thereof, it will be understood by those of ordinary skill in the art that various changes in form and details may be made therein without departing from the spirit and scope of the present invention as defined by the following claims,

## Claims

1. A mobile communication terminal comprising:
a user input unit for receiving a user input or selection instruction for a plurality of content;
a content generator for generating the plurality of content to be single content data; and
a controller for determining whether there is sound data among the plurality of content and controlling the content generator to synchronize first content to be displayed while the sound data is played among the plurality of content to first segment data with the sound data if there is the sound data, and to synchronize second content to be displayed while the sound data is not played among the plurality of content to at least one piece of second segment data.

2. The mobile communication terminal of claim 1. wherein the second segment data comprises the second content input or selected through the user input unit from when the plurality of content starts to be input through the user input unit to when the sound data is input.

3. The mobile communication terminal of claim 1, wherein the second segment data comprises the second content input or selected through the user input unit from when inputting of the sound data is completed to when another sound data is input through the user input unit.

4. The mobile communication terminal of claim 1, further comprising a display unit for displaying the content data,
wherein the display unit displays the content data in units of segment data.

5. The mobile communication terminal of claim 4, wherein the controller controls the display unit to display the first segment data and the second segment data in units of content included in the segment data.

6. The mobile communication terminal of claim 1, wherein the content generator encodes the first segment data by converting the first segment data in a JPEG format, converting the sound data in a 3GP format, and embedding the converted sound data in the converted first segment data.

7. A method of generating content in a mobile communication terminal, the method comprising:
receiving a user input or selection instruction for a plurality of content;
determining whether there is sound data among the plurality of content; and
if there is sound data, generating content data by synchronizing first content to be displayed while the sound data is played among the plurality of content to first segment data.

8. The method of claim 7, wherein if there is no sound data, generating content data by synchronizing second content to be displayed while the sound data is not played among the plurality of content to second segment data.

9. The method of claim 8, wherein the second segment data comprises the second content input or selected from a user from when the plurality of content starts to be input to when the sound data is input.

10. The method of claim 8, wherein the second segment data comprises the second content input or selected from a user from when inputting of the sound data is completed to when another sound data is input from the user.

11. The method of claim 7, further comprising displaying the content data in units of content included in the segment data.

12. The method of claim 11, wherein displaying the content data in units of content included in the segment data comprises:
if a user input to perform a rewind function is received from the user, re-displaying at least one content which has been displayed among the content data.

13. The method of claim 11, wherein displaying the content data in units of content included in the segment data comprises:
if a user input to perform a fast-forward function is received from the user, displaying a content next to at least one content which has been displayed among the content data.

14. The method of claim 7, wherein generating the content data to be the first segment data comprises:
encoding the first segment data by converting the first segment data in a JPEG format, converting the sound data in a 3GP format, and embedding the converted sound data in the converted first segment data.
